Europäisches Patentamt

European Patent Office

Office européen des brevets

(19)

(11) Numéro de publication : **0 451 033 A1**

(12) # DEMANDE DE BREVET EUROPEEN

(21) Numéro de dépôt : **91400857.8**

(22) Date de dépôt : **29.03.91**

(51) Int. Cl.⁵ : **A47J 36/02**

(30) Priorité : **02.04.90 FR 9004167**

(43) Date de publication de la demande :
**09.10.91 Bulletin 91/41**

(84) Etats contractants désignés :
**DE IT**

(71) Demandeur : **Fontanie, Etienne**
**10, rue des lilas**
**F-92500 Rueil-Malmaison (FR)**
Demandeur : **Hede, Jean-Paul**
**rue Drappes**
**F-46110 Vayrac (FR)**

(72) Inventeur : **Fontanie, Etienne**
**10, rue des lilas**
**F-92500 Rueil-Malmaison (FR)**
Inventeur : **Hede, Jean-Paul**
**rue Drappes**
**F-46110 Vayrac (FR)**

(54) **Ustensile ménager de cuisson.**

(57) La présente invention concerne les ustensiles ménagers de cuisson, tels que casseroles, poêles, fait-touts, etc ... en un metal à bas point de fusion, notamment en aluminium.

Pour permettre, sans inconvénient, l'utilisation de ces ustensiles sur des plaques chauffantes vitro-céramiques, l'invention propose de munir ces ustensiles d'un faux-fond ajouré (12) réalisé en un métal ayant une température de fusion nettement supérieure à celle du métal de l'ustensile (10) et fixé extérieurement sur le fond de ce dernier.

Fig.2

EP 0 451 033 A1

La présente invention concerne les ustensiles ménagers de cuisson, tels que casseroles, poêles, fait-touts, etc... en métal à bas point de fusion, notamment en aluminium, destinés à être chauffés par une source de chaleur - brûleur à gaz, plaque électrique, plaque vitrocéramique, plaque à induction - sur laquelle ils sont posés.

Lorsque ces ustensiles sont chauffés par rayonnement sur des plaques vitrocéramiques leur fond est soumis localement à des températures élevées qui peuvent provoquer un ramollissement du métal et la détérioration de l'ustensile. Par ailleurs, ces ustensiles ne peuvent pas être chauffés par induction.

Le but de la présente invention est de permettre, sans inconvénient, l'utilisation de ces ustensiles sur des plaques chauffantes vitrocéramiques et des plaques à induction.

L'ustensile de cuisson objet de la présente invention est caractérisé en ce qu'un faux-fond ajouré réalisé en un métal ayant une température de fusion nettement supérieure à celle du métal de l'ustensile est fixé extérieurement sur le fond de ce dernier. Le faux-fond pourra, par exemple, être en acier.

De préférence, la surface totale du faux-fond en contact avec le fond de l'ustensile sera supérieure à la surface du faux-fond constituant la surface d'appui de l'ustensile et par laquelle il repose sur la source de chaleur, plaque chauffante ou autre.

Avantageusement, les jours ménagés dans le faux-fond déboucheront sur sa périphérie de façon à permettre une circulation d'air entre le fond et la source de chaleur.

Le faux-fond pourra être constitué par une grille formée, par exemple, de barres disposées à angles droits ou suivant le périmètre et les rayons d'un ou plusieurs cercles ou polygones réguliers. Il pourra aussi être formé d'une barre (profilé) enroulée en spirale ou repliée en serpentin.

Ces barres auront une section carrée, rectangulaire, trapézoïdale ou autre, leur face destinée à venir reposer sur la plaque chauffante étant polie et ses bords chanfreinés pour éviter de rayer la plaque.

Le faux-fond pourra aussi être formé par découpe, perçage et/ou emboutissage d'une tôle, ou obtenu par moulage.

Le faux-fond pourra être fixé sur le fond de l'ustensile par tout moyen soudage, brasage, collage, sertissage, etc... - capable de résister aux températures auxquelles l'ustensile pourra être soumis.

Dans le cas d'ustensiles fabriqués par moulage, le faux-fond sera, de préférence, incorporé au fond de l'ustensile pendant le moulage.

Pour cela, le faux-fond sera placé sur le fond du moule et lorsque l'on coulera le métal dans le moule il recouvrira le faux-fond en remplissant les jours de ce dernier ; après solidification, le faux-fond fera partie intégrante du fond de l'ustensile.

En captant la plus grande partie de l'énergie rayonnée par la source de chaleur et en maintenant le fond de l'ustensile à l'écart de la plaque chauffante, le faux-fond permettra d'éviter les surchauffes locales sur le fond. Par ailleurs, l'utilisation d'un faux-fond en métal ou alliage ferromagnétique, tel que l'acier permettra de chauffer un ustensile en métal amagnétique, tel que l'aluminium avec un système de chauffage à induction.

La description qui suit se réfère aux dessins l'accompagnant qui montrent, à titre d'exemples non limitatifs, quelques formes de réalisation de l'invention. Sur ces dessins :

La figure 1 est une vue en plan d'une poêle conforme à l'invention placée sens dessus dessous ;

La figure 2 est une demi-vue en coupe à plus grande échelle suivant 2-2 de la poêle de la figure 1 ;

La figure 3 est une vue analogue à la figure 2 d'une autre forme de réalisation ;

La figure 4 est une vue en plan du faux-fond en tôle de l'ustensile de la figure 3 ;

Les figures 5 et 6 sont des vues en plan et en coupe, respectivement, du fond d'un ustensile de cuisson conforme à l'invention, montrant deux autres formes de réalisation du faux-fond.

Les figures 7 et 8 sont des vues en plan du fond d'ustensiles de cuisson montrant encore deux autres formes de réalisation du faux-fond ; et,

La figure 9 est une vue partielle en coupe d'un moule préparé pour le moulage d'un ustensile de cuisson conforme à l'invention.

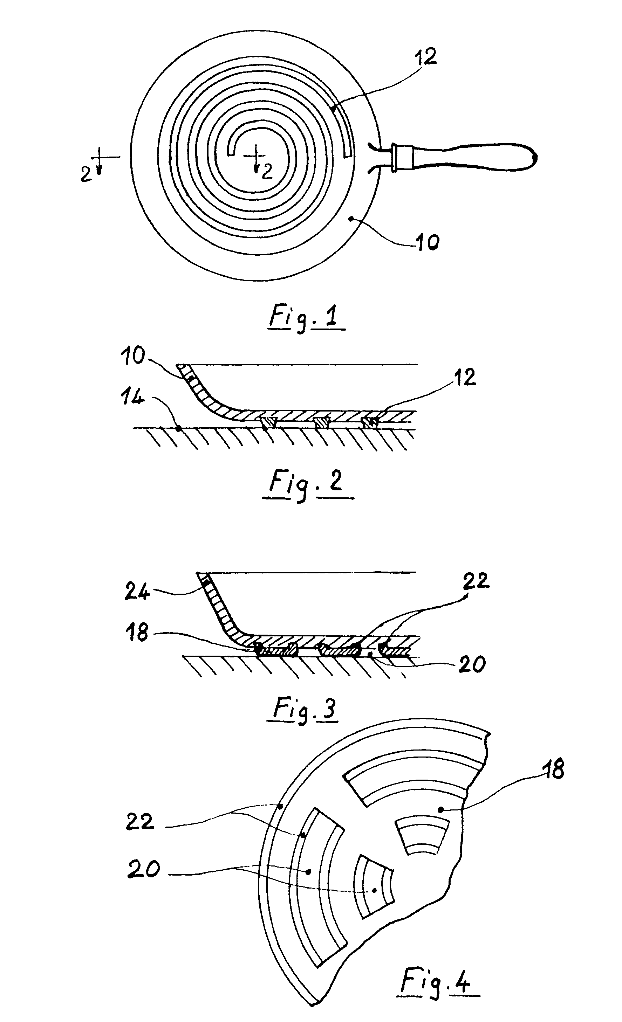

La figure 1 montre une poêle en aluminium 10 sur le fond de laquelle est fixé un faux-fond constitué par un profilé en acier 12 enroulé en spirale. Le profilé a une section trapézoïdale ; sa grande base est noyée dans le métal constituant le fond de la poêle tandis que sa petite base repose sur la plaque 14.

La forme trapézoïdale du profilé et le fait que sa grande base soit noyée dans le métal du fond permettent une meilleure diffusion de la chaleur du faux-fond vers le fond.

Cette poêle est fabriquée en utilisant le moule 16 représenté sur la figure 9. Au fond de ce moule est usinée une rainure en spirale dont la forme et la section correspondent à celle du profilé 12 et dont la profondeur est inférieure à l'épaisseur du profilé, de telle sorte que celui-ci s'adapte avec un léger jeu dans la rainure et fasse saillie sur le fond du moule, comme on le voit sur la figure 9. Après mise en place du profilé, on ferme le moule et on verse le métal en fusion dans la cavité de moulage.

Les figures 3 et 4 montrent une autre forme de réalisation dans laquelle le faux-fond est constitué par un disque en tôle 18 découpé et embouti. Des ouvertures 20 en arc de cercle sont formées dans le disque, et les bords du disque et des ouvertures sont repliées pour former des parties en saillies 22 servant à la fixation du faux-fond sur le fond de l'ustensile 24. Le faux-fond peut être incorporé au fond de l'ustensile en cours de moulage, de la même manière que le faux-fond 12 de la poêle des figures 1 et 2. On peut aussi le fixer par sertissage en prévoyant sur le fond de l'ustensile des rainures dans lesquelles viendraient se loger et seraient serties les parties en saillie 22 du faux-fond.

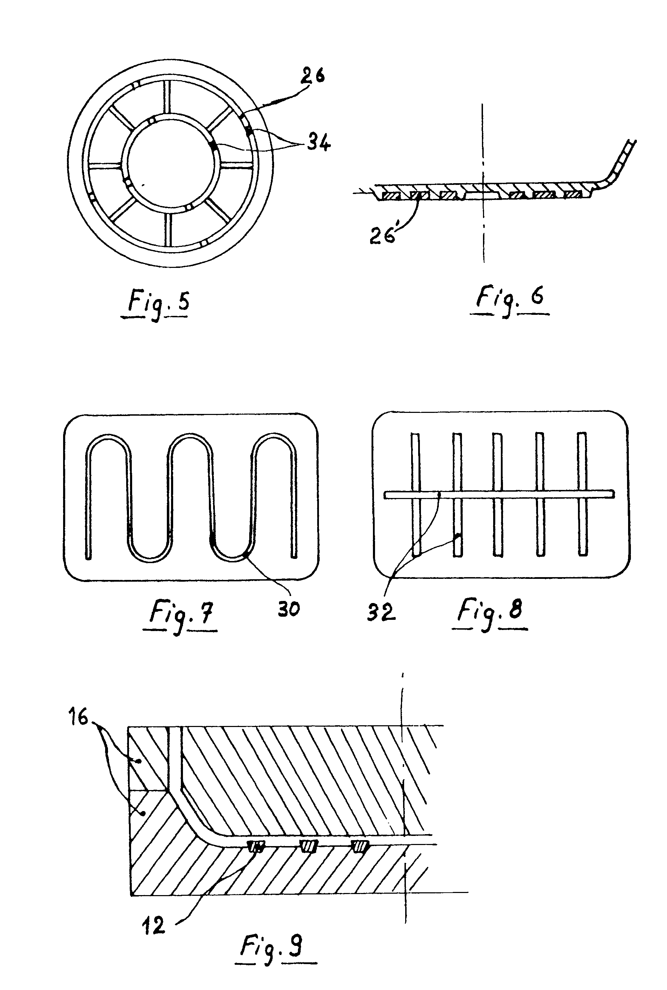

La figure 5 montre un faux-fond 26 constitué par une grille formée de barres en arc de cercle et radiales définissant une ouverture centrale et une série d'ouvertures disposées autour de celle-ci.

Une variante de cette solution consisterait à constituer le faux-fond par un disque 26' en acier percé d'une ouverture centrale et d'une ou plusieurs rangées circulaires de trous entourant l'ouverture centrale; La figure 6 est une vue partielle, en coupé, illustrant cette solution.

Les figures 7 et 8 montrent des ustensiles rectangulaires. Sur la figure 7, le faux-fond est constitué par une barre 30 repliée en serpentin. Sur la figure 8, le faux-fond est constitué par une grille 32 formée d'une barre médiane et de barres perpendiculaires à celle-ci.

Des rainures, gorges ou encoches telles que les encoches 24 visibles sur la figure 5 pourront être prévues ou usinées sur la face du faux-fond destinée à être mise en contact avec la plaque chauffante pour permettre une circulation d'air entre le fond de l'ustensile et la plaque.

Il est bien entendu que les formes de réalisation décrites ci-dessus ne sont pas limitatives et que toutes les modifications qui peuvent y être apportées par l'emploi de moyens techniques équivalents entrent dans le cadre de l'invention.

## Revendications

1. Ustensile ménager de cuisson en métal à point de fusion relativement bas, tel que l'aluminium, caractérisé en ce qu'un faux-fond ajouré (12, 18, 26, 26', 30, 32) réalisé en un métal ayant une température de fusion nettement supérieure à celle du métal de l'ustensile est fixé extérieurement sur le fond de ce dernier.

2. Ustensile selon la revendication 1, caractérisé en ce que la surface totale du faux-fond en contact avec le fond de l'ustensile est supérieure à la surface du faux-fond constituant la surface d'appui de l'ustensile et par laquelle il repose sur la source de chaleur (14)

3. Ustensile selon la revendication 1 ou 2, caractérisé en ce que les jours ménagés dans le faux-fond débouchent sur la périphérie de façon à permettre une circulation d'air entre le fond et la source de chaleur (14)

4. Ustensile selon la revendication 1, 2 ou 3, caractérisé en ce que le faux-fond est constitué par une grille (26, 26', 32) formée de barres rectilignes ou courbes.

5. Ustensile selon la revendication 1, 2 ou 3 caractérisé en ce que le faux-fond est formé d'un profilé enroulé en spirale (12) ou replié en serpentin (30)

6. Ustensile selon la revendication 4 ou 5, caractérisé en ce que les dites barres ou profilés ont une section trapézoïdale, la grande base étant en contact avec le fond de l'ustensile.

7. Ustensile selon la revendication 1, 2 ou 3 caractérisé en ce que le faux-fond est constitué par un disque dans lequel sont formées des ouvertures.

8. Ustensile selon l'une quelconque des revendications précédentes, caractérisé en ce que le faux-fond est réalisé en un métal ferro-magnétique, tel que l'acier.

9. Ustensile de cuisson conforme à l'une quelconque des revendications précédentes et caractérisé en ce que le faux-fond est incorporé au fond de l'ustensile pendant le moulage.

10. Procédé pour la fabrication par moulage d'un ustensile selon l'une quelconque des revendications précédentes, caractérisé en ce que le faux-fond ajouré est placé sur le fond su moule, de telle sorte que lorsque le métal en fusion est versé dans le moule, il recouvre entièrement le faux-fond en remplissant les jours de ce dernier.

Fig.1

Fig.2

Fig.3

Fig.4

*Fig. 5*

*Fig. 6*

*Fig. 7*   30

32   *Fig. 8*

16

12

*Fig. 9*

Office européen
des brevets

# RAPPORT DE RECHERCHE EUROPEENNE

Numero de la demande

EP    91 40 0857

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 111 867 (ARDAL)<br>* le document en entier *<br>--- | 1,10 | A47J36/02 |
| A | DE-A-1 679 133 (WURTTEMB.)<br>* le document en entier *<br>----- | 1,10 | |
| | | | **DOMAINES TECHNIQUES RECHERCHES (Int. Cl.5)**<br><br>A47J |
| | Le présent rapport a été établi pour toutes les revendications | | |

| Lieu de la recherche | Date d'achèvement de la recherche | Examinateur |
|---|---|---|
| LA HAYE | 09 JUILLET 1991 | NGO SI XUYEN G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

......................................................................
& : membre de la même famille, document correspondant

EPO FORM 1503 03.82 (P0402)